# EUROPEAN PATENT APPLICATION

(11) **EP 1 920 893 A1**
(43) Date of publication of application: **14.05.2008**
(21) Application number: 06121425.0
(22) Date of filing: 10.11.2006
(51) Int. Cl.: B25J 19/00

(54) **Industrial robot with radiation heat reflecting surface and air flow generating device**

(71) Applicant: ABB RESEARCH LTD., 8050 Zürich (CH)
(72) Inventor: Johansson, Erik, 722 45 Västerås (SE); Lundström, Christer, 745 71 Enköping (SE); Wikström, Tobias, 5704 Egliswil (CH)
(74) Representative: Dahlstrand, Björn

(57) **Abstract**

The invention relates to an industrial robot system comprising an industrial robot including a plurality of articulated arms (3,4,5) arranged to be movable relative to one another. At least on one of the articulated arms there is arranged a surface (11) with reflecting properties with respect to radiation heat. The industrial robot system also comprises a device (6) adapted to generate an air flow directed into the articulated arms or towards the vicinity of said reflecting surface (11) for the purpose of reducing radiation heat that influences said surface.

## Description

### TECHNICAL FIELD

The present invention relates to an industrial robot system comprising an industrial robot including a plurality of linkage arms arranged to be movable relative to one another.

### BACKGROUND ART

It is already known to use industrial robot systems comprising industrial robots in many different automation processes in order to increase the degree of efficiency in the production and to reduce the risks of occupational injuries for the personnel who would otherwise have carried out the different operations. In fields of use where molten metal or metal of a high temperature occurs, for example in foundries, there is a specially great need of replacing people with industrial robots, and then in order for the industrial robot system to function as good as possible, it has to be ensured that the robots are not damaged by the high temperatures that arise due to the radiation heat from the melts. That part of an industrial robot that runs the greatest risk of being negatively influenced by high temperatures caused by radiation heat from a melt is the robot arm, which accommodates, among other things, motors, seals, gearboxes, sensors, lubricants, and cables and wires, with accessories, both for operation and control of the robot and for operation and control of the tool mounted on the robot. If the temperature of the robot arm, due to radiation heat, becomes too high, this leads to a risk of the equipment installed in the robot arm becoming destroyed, resulting in stoppage of operation and high costs of repair as an immediate consequence. An additional problem that may arise if the temperature, caused by radiation heat from, for example, a molten metal, on the robot arm becomes too high is that the arm may quite simply be deformed.

It is previously known to provide cooling of robot arms. JP 9085674, for example, discloses a solution with a system of bellows, mounted in a robot arm, which generates an air flow, through the movements of the robot arm, which is directed towards a motor in the absolute vicinity of the system of bellows. The disadvantage of this solution is that it only functions when the robot is in motion and that there is no possibility to control the need of cooling air while at the same time the temperature of the air that is generated by the system of bellows cannot fall below the surrounding temperature. Further, it is also known before that it is possible to use heat-dissipating screens to protect an industrial robot from high radiation temperatures, but at the same time this involves a risk that the working range of the robot is limited. An additional alternative for protecting the robot from high temperatures is to use water cooling or nitrogen gas cooling, but these solutions are not suitable from a production-engineering or economic point of view. An additional alternative for protecting a robot from radiation heat is to manufacture the articulated arms of, or coat parts of the articulated arms with, a phase-transformation material, that is, a material that undergoes a phase transformation when it absorbs a large quantity of thermal energy. By choosing a phase-transformation material that has a melting point just above the working temperature in the region in question at or about the articulated arms, and since the phase transformation absorbs a large quantity of thermal energy, this results in a material that absorbs heat as soon as the working temperature rises above the normal working temperature. However, from the point of view of economy, this solution is also not suitable.

### SUMMARY OF THE INVENTION

The object of the present invention is to provide an industrial robot system that solves or at least reduces the above-mentioned, previously known problems.

This object is achieved with the industrial robot system described in the introductory part of the specification, which is characterized in that, on at least some part of the articulated arms of the robot, there is arranged a surface reflecting the radiation heat and that, in addition, the industrial robot system comprises a device adapted to generate an air flow directed towards the vicinity of said surface for the purpose of reducing radiation heat that influences said surface. Such a combination of a reflecting surface and a generated directional air flow reduces the risk of the temperature of the articulated arms of the robot becoming so high that the articulated arm or the equipment mounted in the articulated arm is destroyed.

According to another embodiment of the invention, the reflecting surface consists of a material with good properties with respect to reflecting radiation heat, advantageously consisting of nickel, silver, aluminium or alloys of any of the previously mentioned metals.

According to a further embodiment of the invention, the reflecting surface consists of paint containing flakes of a metallic material that advantageously consists of a material or an alloy having good properties with respect to reflecting radiation heat. This embodiment results in satisfactory thermal resistivity on the articulated arms of the robot while at the same time it is simple and inexpensive to apply the paint.

According to still another embodiment of the invention, said device comprises a fan means and a flexible bendable tube system with an exhaust nozzle arranged adjacent to the articulated arm with the surface reflecting the radiation heat. The fan means may be arranged spaced from the robot and the melt so as not to be influenced by the high temperatures that are caused by the radiation heat from the melt. This means that it is always ensured that the air flow generated by the fan means maintains a lower temperature compared with the air that surrounds the robot, with an ensuing good heat-reduction effect as a direct consequence thereof.

According to yet another embodiment of the invention, said device also comprises a cooling device that delivers cooled air to the above-mentioned fan means. With such an embodiment, a further reduced temperature influence on the robot arm is obtained since the air that will influence the robot arm through the fan means and the flexible bendable tube system is colder than the surrounding air.

According to still a further embodiment of the invention, the flexible bendable tube system is arranged inside at least one of the articulated arms with the exhaust nozzle arranged adjacent to the articulated arm with the surface reflecting the radiation heat. By arranging the flexible bendable tube system inside at least one of the articulated arms, the risk of the tube system negatively influencing the mobility of the robot arms is reduced, while at the same time the risk of any external matter getting stuck in the tube system is reduced.

According to yet a further embodiment of the invention, the flexible bendable tube system is arranged outside the robot with the exhaust nozzle arranged adjacent to the articulated arm that is arranged with the surface reflecting the radiation heat. In this way, adapting the tube system and the nozzle to different working ranges will be a simple matter.

According to still yet another embodiment of the invention, at least one temperature sensor is arranged in or adjacent to any of the articulated arms. Said device is advantageously used to control the air flow and coolant flow from the fan means which, via the flexible tube system and at least one nozzle, is to protect the robot arm against high temperatures caused by radiation heat.

According to an additional embodiment of the invention, the fan means is arranged inside or immediately outside any of the articulated arms of the robot, in which case it is not necessary to use any flexible bendable tube system with an associated exhaust nozzle to cool the articulated arms.

### BRIEF DESCRIPTION OF THE DRAWINGS

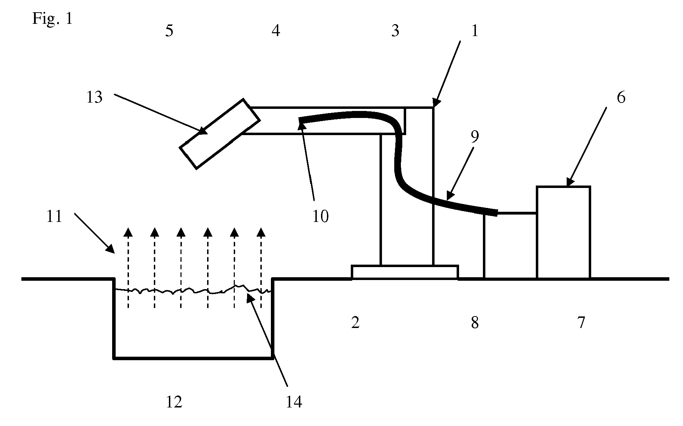

Figure 1 shows an industrial robot system according to one embodiment of the invention.

### DETAILED DESCRIPTION OF DIFFERENT EMBODIMENTS OF THE INVENTION

Figure 1 shows an embodiment of an industrial robot system according to the invention, comprising an industrial robot 1 including a stand 2, a first 3, a second 4 and a third 5 articulated arm 5, wherein the first articulated arm 3 is arranged rotatable relative to the stand 2, the second articulated arm 4 is arranged rotatable relative to the first articulated arm 3, and the third articulated arm 5 is arranged rotatable relative to the second articulated arm 4, and a device 6 comprising a fan means 7, a cooling device 8 and a flexible bendable tube system 9 with at least one exhaust nozzle 10 arranged inside or adjacent to any of the articulated arms 3-5 of the robot. The device 6 is located at such a distance from the robot that the air surrounding the fan means 6 is not directly influenced by the radiation heat 11 that is emitted from the molten metal 12 which is located adjacent to the working range of the industrial robot 1.

For the purpose of protecting the articulated arms 3-5 against high temperatures caused by, for example, an aluminium melt 12, a reflecting surface is arranged on at least one of the articulated arms 3-5. Further, the articulated arms 3-5 are also protected, in this embodiment on the second articulated arm 4, against high temperatures by the device 6 feeding cooled air into the bendable and flexible tube system 9 for further transport of the cooled air up to at least one nozzle 10 which is mounted and directed on the bendable and flexible tube system and which is intended to direct the exhaust of the cooled air into the articulated arms 3-5 or towards the vicinity of the articulated arms 3-5 that are to be protected against high temperatures caused by the radiation heat 11 that is emitted from the melt 12. By using directional nozzles 10, it is ensured that the exhaust of cooling air is not directed towards the melt 12, which is important since otherwise there is a risk of oxidation at the meniscus 14 of the melt.

The need of cooled air is determined, for example, with the aid of a temperature sensor 13, located inside or adjacent to any of the articulated arms 3-5, in this embodiment on the third articulated arm 5, which detects the temperature and thereby, where necessary, controls the flow of cooling air from the device 6.

The reflecting surface that is arranged on at least one of the articulated arms 3-5 will now be explained in greater detail. The surface may consist of paint containing flakes of a metallic material having good properties with respect to reflecting radiation heat, for example aluminium, since this material forms a very thin oxide layer that provides good reflecting properties against heat radiation. The surface may also consist of other metallic materials with good properties with respect to reflecting radiation heat, in particular when they are bright finished, such as gold, silver, copper and nickel.

The invention is not limited to the embodiment shown but may be varied and modified within the scope of the following claims.

## Claims

1. An industrial robot system comprising an industrial robot (1) comprising a plurality of articulated arms (3, 4, 5) arranged to be movable in relation to one another, **characterized in that** a surface reflecting radiation heat (11) is arranged on at least one of the articulated arms (3, 4, 5), and that the industrial robot system comprises a device (6) adapted to generate an air flow directed towards the vicinity of said surface for the purpose of reducing radiation heat (11) that influences said surface.

2. An industrial robot system according to claim 1, **characterized in that** the reflecting surface consists of a material or an alloy having good properties with respect to reflecting heat radiation (11).

3. An industrial robot system according to claim 1, **characterized in that** the reflecting surface consists of paint containing flakes of a metallic material.

4. An industrial robot system according to claim 3, **characterized in that** the metallic material comprises a material or an alloy having good properties with respect to reflecting radiation heat.

5. An industrial robot system according to claim 1, **characterized in that** said device (6) that is arranged to generate an air flow comprises a fan means (7) and a flexible bendable tube system (9) having at least one exhaust nozzle (10) arranged adjacent to the articulated arm (3, 4, 5) with the surface reflecting the radiation heat (11).

6. An industrial robot system according to claim 5, **characterized in that** a cooling device (8) is arranged adjacent to the fan means (6) to generate air with a lower temperature than that of the surrounding air.

7. An industrial robot system according to claim 5, **characterized in that** the flexible bendable tube system (9) is arranged inside at least one of the articulated arms (3, 4, 5) and that the exhaust nozzle (10) is arranged in or adjacent to the articulated arm arranged with the surface reflecting the radiation heat (11).

8. An industrial robot system according to claim 5, **characterized in that** the flexible bendable tube system (9) is arranged outside the robot (1) and that the exhaust nozzle (10) is arranged adjacent to the articulated arm arranged with the surface reflecting the radiation heat (11).

9. An industrial robot system according to claim 1, **characterized in that** at least one temperature sensor (13) is mounted at least in or adjacent to any of the articulated arms (3, 4, 5), said sensor being adapted to measure the temperature on or inside the articulated arm, and that said sensor is adapted to control the air and coolant flow, generated by the device (6), in dependence on the temperature detected by the temperature sensor (13).

10. An industrial robot system according to claim 5, **characterized in that** the fan means (7) is arranged inside or directly outside any of the articulated arms (3, 4, 5) of the robot.
